# EUROPEAN PATENT APPLICATION

(11) **EP 4 741 068 A1**
(43) Date of publication of application: **13.05.2026**
(21) Application number: 25187231.3
(22) Date of filing: 03.07.2025
(51) Int. Cl.: B05C 5/02, B05C 9/06, H01M 4/04

(54) **SLOT DIE FOR MANUFACTURING SECONDARY BATTERY ELECTRODE**

(30) Priority: 12.11.2024 KR 20240160211
(71) Applicant: SAMSUNG SDI CO., LTD., Yongin-si, Gyeonggi-do 17084 (KR)
(72) Inventor: KIM, Gi Sung, 16678 Suwon-si, Gyeonggi-do (KR); SEO, Won Sub, 16678 Suwon-si, Gyeonggi-do, (KR); LEE, Seung Hak, 16678 Suwon-si, Gyeonggi-do, (KR); JUNG, Rae Joon, 16678 Suwon-si, Gyeonggi-do, (KR); KIM, So Hun, 16678 Suwon-si, Gyeonggi-do, (KR); LEE, Seung Yeon, 16678 Suwon-si, Gyeonggi-do (KR)
(74) Representative: Gulde & Partner

(57) **Abstract**

A slot die for manufacturing a secondary battery electrode includes a supplier configured to supply a substrate, an electrode die configured to coat the substrate with an electrode slurry, an insulating die configured to coat the substrate having passed hrough the electrode die with an insulating slurry, and a uniform flow velocity part on the insulating die and configured to reduce a flow velocity deviation of the discharged insulating slurry.

## Description

### BACKGROUND

### 1. Field

Aspects of embodiments of the present disclosure relate to a slot die for manufacturing a secondary battery electrode.

### 2. Description of Related Art

The demand for portable electronic products, such as laptop computers, video cameras, and portable phones increases rapidly, and robots, electric vehicles, and the like are commercialized. Thus, research on high-performance secondary batteries capable of being repeatedly charged and discharged is actively conducted. In particular, lithium secondary batteries have a high energy density and a high operating voltage, have excellent preservation and lifetime characteristics, and thus are widely used as energy sources for various electronic products.

Unlike primary batteries, the secondary batteries are batteries that are repeatedly charged and discharged. Small-capacity secondary batteries may be used in portable small electronic devices, such as mobile phones, laptop computers, and camcorders. High-capacity and high-density secondary batteries may be used for motor driving power of hybrid vehicles and electric vehicles, or energy storage.

The secondary battery includes an electrode assembly for charging and discharging a current, a case for accommodating the electrode assembly and an electrolyte, a cap plate coupled to an opening of the case, and an electrode terminal through which current flows from the electrode assembly to an outside of the cap plate.

In the electrode assembly, electrodes may be arranged on both, or opposite, sides of a separator, which is an electrically insulating material, and a structure in which the separator and the electrodes are wound, stacked, or mixed may be formed. The separator may continuously maintain ion conductivity while isolating the electrodes having different polarities in the electrode assembly, thereby charging and discharging the electrode assembly.

The electrode may be formed by coating a substrate with an active material slurry. A slot die may be used for manufacturing the electrode by coating the substrate with the active material slurry. The slot die includes a lower die and an upper die that form a chamber for supplying the active material slurry and set a height of a slot for discharging the active material slurry and includes a core member that is installed therebetween to set a width of the slot.

The above information disclosed in this Background section is provided for enhancement of understanding of the background of the present disclosure, and, therefore, it may contain information that does not constitute related (or prior) art.

### SUMMARY

According to an aspect of embodiments of the present disclosure, a slot die for manufacturing a secondary battery electrode is provided corresponding to the appended claims, in which the slot die may satisfy mixture coating quality, may be used for a model having a narrow uncoated area, and may satisfy coating quality of an insulating layer. According to another aspect of embodiments of the present disclosure, a slot die for manufacturing a secondary battery electrode is capable of improving coating quality by ensuring flow velocity uniformity of a slurry.

The above and other aspects and features of the present disclosure will be described in or will be apparent from the following description of some embodiments of the present disclosure.

According to one or more embodiments of the present disclosure, a slot die for manufacturing a secondary battery electrode includes a supplier configured to supply a substrate (e.g., a foil), an electrode die configured to coat the substrate with an electrode slurry, an insulating die configured to coat the substrate having passed through the electrode die with an insulating slurry, and a uniform flow velocity part on the insulating die and configured to reduce a flow velocity deviation of the insulating slurry which is discharged.

The supply part may include an unwinding roller around which the substrate is wound and which is configured to supply the substrate, a coating roller facing the electrode die and the insulating die and configured to allow the substrate to pass therethrough, and a moving roller configured to move the substrate having passed through the coating roller.

The electrode die may coat the electrode slurry such that a single-column electrode part is formed on the foil/substrate, and the insulating die may be arranged above the substrate and configured to coat the insulating slurry such that insulating parts are formed on both, or opposite, sides of the electrode slurry.

The electrode die may coat the electrode slurry such that multi-column electrode parts are formed on the foil/substrate to be spaced apart from each other, and the insulating die may be arranged above the substrate and configured to coat the insulating slurry such that insulating parts are formed on both, or opposite, sides of the electrode slurry.

The insulating die may include a die support, an upper die that is mounted on the die support and configured to supply the insulating slurry, and a lower die coupled to the upper die, and the uniform flow velocity part may be between the upper die and the lower die and configured to guide the insulating slurry to be discharged.

The upper die may include a first upper die that is coupled to the die support part and configured to supply the insulating slurry to a first side of the electrode slurry, and a second upper die that is coupled to the die support part and configured to supply the insulating slurry to a second side of the electrode slurry.

The lower die may include a first lower die coupled to the first upper die and a second lower die coupled to the second upper die.

The uniform flow velocity part may include a first uniform part between the first upper die and the first lower die, and a second uniform part between the second upper die and the second lower die.

The first upper die and the second upper die may be symmetrical to each other, the first lower die and the second lower die may be symmetrical to each other, and the first uniform part and the second uniform part may be symmetrical to each other.

The uniform flow velocity part may include an inlet part configured to guide the insulating slurry supplied from the upper die, and an outlet part that is connected to the inlet part, is configured to guide the insulating slurry passing through the inlet part in a diagonal direction, and uniformizes a flow velocity.

The inlet part may include a first inlet part, a second inlet part extending from a first side of the first inlet part, and a third inlet part extending from a second side of the first inlet part, and an inflow flow path may be defined in a space between the second inlet part and the third inlet part.

The outlet part may include a second outlet part extending from the second inlet part and a third outlet part extending from the third inlet part, and an outflow flow path communicating with the inflow flow path may be defined in a space between the second outlet part and the third outlet part in the diagonal direction.

The second outlet part may include a second outflow inclination part extending from the second inlet part in the diagonal direction and a second outflow extension part extending from the second outflow inclination part.

The third outlet part may include a third outflow inclination part extending from the third inlet part in the diagonal direction and facing the second outflow inclination part and a third outflow extension part extending from the third outflow inclination part and facing the second outflow extension part.

A length of the second outflow inclination part may be greater than or equal to a length of the third outflow inclination part.

An entry point of the second outflow inclination part may be higher than an entry point of the third outflow inclination part.

The second outflow extension part may have a tapered shape.

A width of the inflow flow path may be greater than a width of the outflow flow path.

A plurality of uniform flow velocity parts may be joined.

Uniform flow velocity parts of the plurality of uniform flow velocity parts may have different shapes.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings.
FIG. 1 is a schematic side view illustrating a slot die for manufacturing a secondary battery electrode according to an embodiment of the present disclosure;
FIG. 2 is a schematic side view illustrating a supply part according to an embodiment of the present disclosure;
FIG. 3 is a schematic view showing a state in which a single-column electrode plate is manufactured using the slot die for manufacturing a secondary battery electrode according to an embodiment of the present disclosure;
FIG. 4 is a schematic view showing a state in which a multi-column electrode plate is manufactured using the slot die for manufacturing a secondary battery electrode according to an embodiment of the present disclosure;
FIG. 5 is a schematic perspective view illustrating an insulating die according to an embodiment of the present disclosure;
FIG. 6 is a schematic side view illustrating an upper die in FIG. 5;
FIG. 7 is a schematic bottom view illustrating the upper die in FIG. 5;
FIG. 8 is a schematic side view illustrating a lower die in FIG. 5;
FIG. 9 is a schematic plan view illustrating the lower die in FIG. 5;
FIG. 10 is a schematic view illustrating a state in which uniform flow velocity parts are symmetrically disposed according to an embodiment of the present disclosure;
FIG. 11 is a schematic view illustrating the uniform flow velocity part according to an embodiment of the present disclosure;
FIG. 12 is a schematic view illustrating a uniform flow velocity part according to another embodiment of the present disclosure;
FIG. 13 is a schematic view illustrating a flow velocity trend according to a diagonal flow path of the uniform flow velocity part according to an embodiment of the present disclosure;
FIGS. 14 and 15 are schematic views illustrating uniformity of a coating thickness according to a shape of a discharge port of the uniform flow velocity part according to an embodiment of the present disclosure;
FIG. 16 is a schematic view illustrating uniformity of a thickness according to a chamfer shape of the uniform flow velocity part according to an embodiment of the present disclosure;
FIG. 17 is a schematic view illustrating a discharge angle according to viscosity and a pressure of an insulating slurry discharged through the uniform flow velocity part according to an embodiment of the present disclosure; and
FIG. 18 is a schematic view illustrating a discharge amount according to the viscosity and a discharge pressure of the insulating slurry discharged through the uniform flow velocity part according to an embodiment of the present disclosure.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and should be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application, within the scope of the appended claims.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

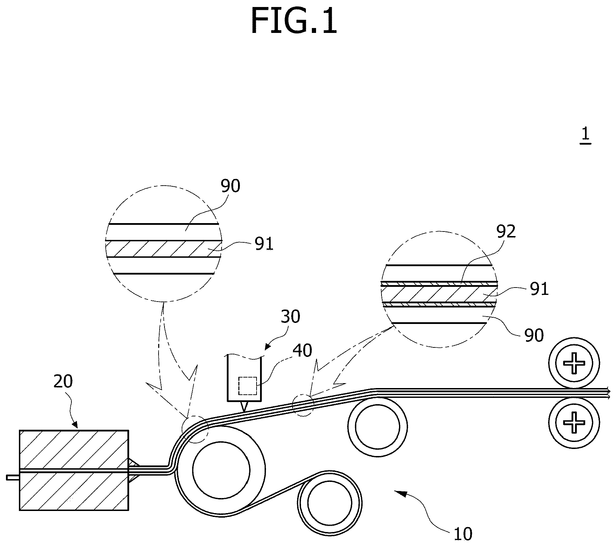

FIG. 1 is a schematic side view illustrating a slot die for manufacturing a secondary battery electrode according to an embodiment of the present disclosure. Referring to FIG. 1, a slot die 1 for manufacturing a secondary battery electrode according to an embodiment of the present disclosure includes a supply part, or supplier, 10, an electrode die 20, an insulating die 30, and a uniform flow velocity part 40.

The supply part 10 is configured to supply a substrate (e.g., a foil) 90. In an embodiment, the substrate 90 may be a metal foil made of a copper material, and an electrode is manufactured by coating the substrate 90 with an electrode slurry 91 and an insulating slurry 92.

The electrode die 20 is configured to coat the substrate 90 with the electrode slurry 91. A central portion of the substrate 90 may be coated with the electrode slurry 91 to form an electrode part. The electrode die 20 may form a single-column electrode part or a multi-column electrode part on the substrate 90.

The insulating die 30 is configured to coat the substrate 90 passing through the electrode die 20 with the insulating slurry 92. The insulating die 30 may be disposed such that both, or opposite, sides of the electrode slurry 91 are coated with the insulating slurry 92.

The uniform flow velocity part 40 is formed on the insulating die 30 and is configured to alleviate, or reduce, a deviation in a flow velocity of the discharged insulating slurry 92. The uniform flow velocity part 40 may guide the discharged insulating slurry 92 such that the flow velocity thereof remains within a certain (e.g., set) range. The insulating slurry 92 discharged from a discharge port of the uniform flow velocity part 40 may have a flow velocity that is uniform or substantially uniform or within a certain (e.g., set) range, and, thus, a coating layer may be stably formed. The uniform flow velocity part 40 may form or define a space for discharging the insulating slurry 92. The uniform flow velocity part 40 may guide the insulating slurry 92 in a diagonal direction. The uniform flow velocity part 40 may remove a stagnant section of the insulating slurry 92 flowing in the diagonal direction to secure or improve flow velocity uniformity. The uniform flow velocity part 40 may be designed such that an amount of the insulating slurry 92 is uniformly or substantially uniformly discharged from a discharge port area. In an embodiment, the uniform flow velocity part 40 may minimize or reduce the stagnant section of the insulating slurry 92 by changing a movement path of the insulating slurry 92, and secure the flow velocity uniformity through an eccentric chamfer shape at the discharge port. In an embodiment, the uniform flow velocity part 40 may respond to a minimum width of an uncoated portion that is an uncoated area.

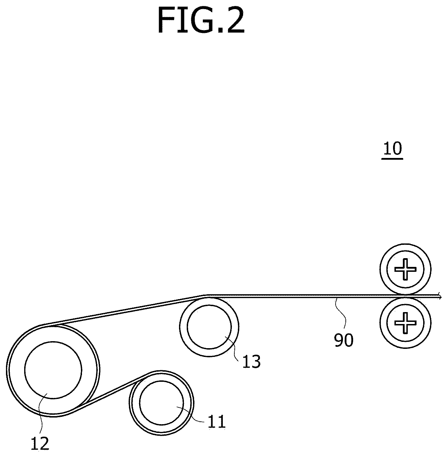

FIG. 2 is a schematic side view illustrating a supply part according to an embodiment of the present disclosure. Referring to FIG. 2, the supply part 10 according to an embodiment of the present disclosure may include an unwinding roller 11, a coating roller 12, and a moving roller 13.

The substrate 90 may be wound around the unwinding roller 11, and the unwinding roller 11 may supply the substrate 90 while being rotated.

The coating roller 12 may be disposed to face the electrode die 20 and the insulating die 30 and may allow the substrate 90 to pass therethrough. As an example, the substrate 90 being moved while wound around the coating roller 12 may pass through the electrode die 20 and then sequentially pass through the insulating die 30. As an example, based on FIG. 1, the electrode die 20 may be disposed at a left side of the coating roller 12, and the insulating die 30 may be disposed on an upper side of the coating roller 12.

The electrode slurry 91 discharged from the electrode die 20 may be coated on the substrate 90 to form the electrode part, and the insulating slurry 92 discharged from the insulating die 30 may be coated on both, or opposite, sides of the electrode slurry 91 to form an insulating part. When the electrode parts are arranged in multiple columns on the substrate 90, the insulating parts may be formed on both, or opposite, sides of the electrode part, and an uncoated area between the insulating parts may be the uncoated portion.

The moving roller 13 may move the substrate 90 having passed through the coating roller 12. After being discharged from the unwinding roller 11, the substrate 90 may be moved to a post-process while sequentially passing through the coating roller 12 and one or more moving rollers 13.

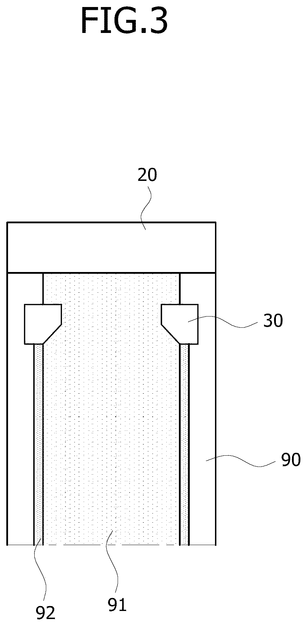

FIG. 3 is a schematic view showing a state in which a single-column electrode plate is manufactured using the slot die for manufacturing a secondary battery electrode according to an embodiment of the present disclosure. Referring to FIG. 3, the electrode die 20 may coat the electrode slurry 91 such that a single-column electrode part is formed on the substrate 90. The substrate 90 coated with the electrode slurry 91 may pass through the insulating die 30. The insulating die 30 may be disposed such that both, or opposite, sides of the electrode slurry 91 are coated with the insulating slurry 92.

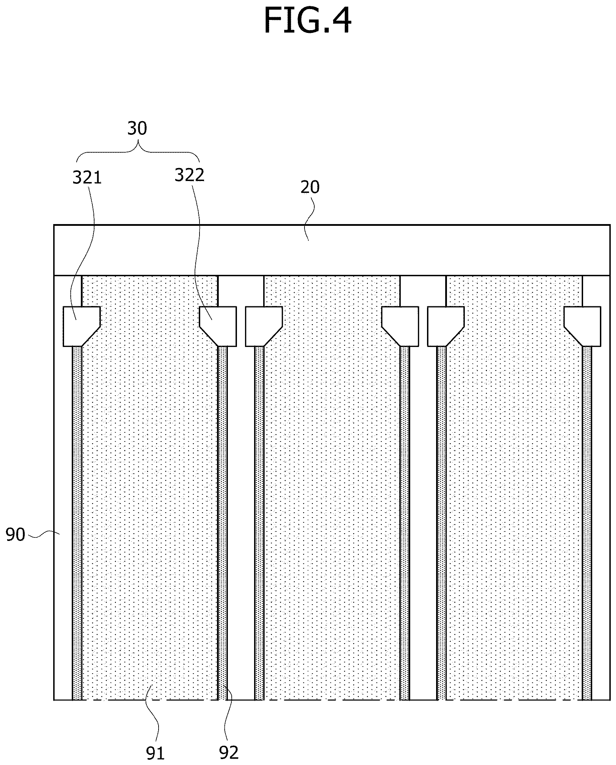

FIG. 4 is a schematic view showing a state in which a multi-column electrode plate is manufactured using the slot die for manufacturing a secondary battery electrode according to an embodiment of the present disclosure. Referring to FIG. 4, the electrode die 20 may coat the electrode slurry 91 such that two or more multi-column electrode parts are formed on the foil/substrate 90 to be spaced apart from each other. The foil/substrate 90 coated with a plurality of electrode slurries 91 may pass through the insulating die 30. The insulating die 30 may be disposed such that both, or opposite, sides of the electrode slurry 91 are coated with the insulating slurry 92.

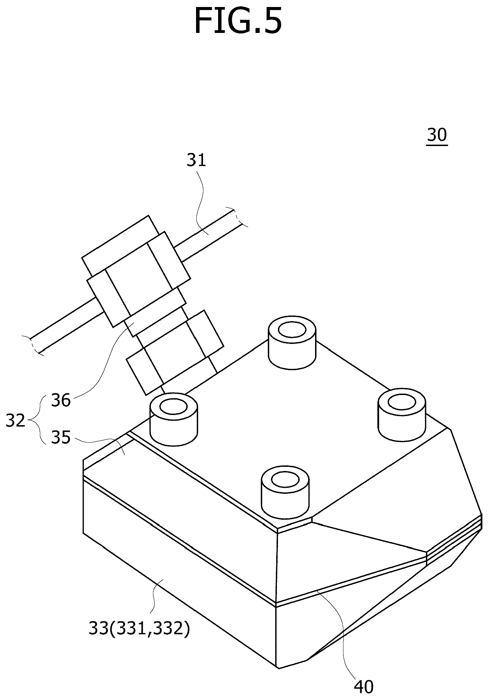

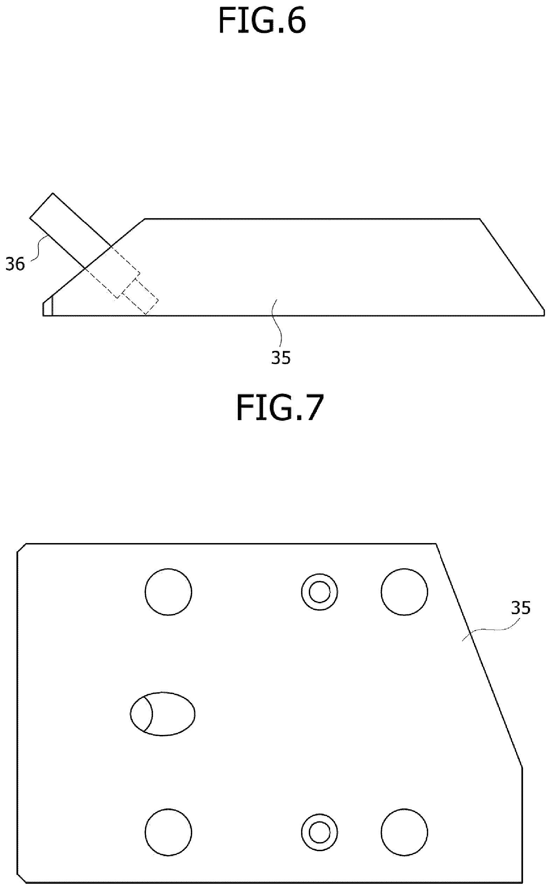

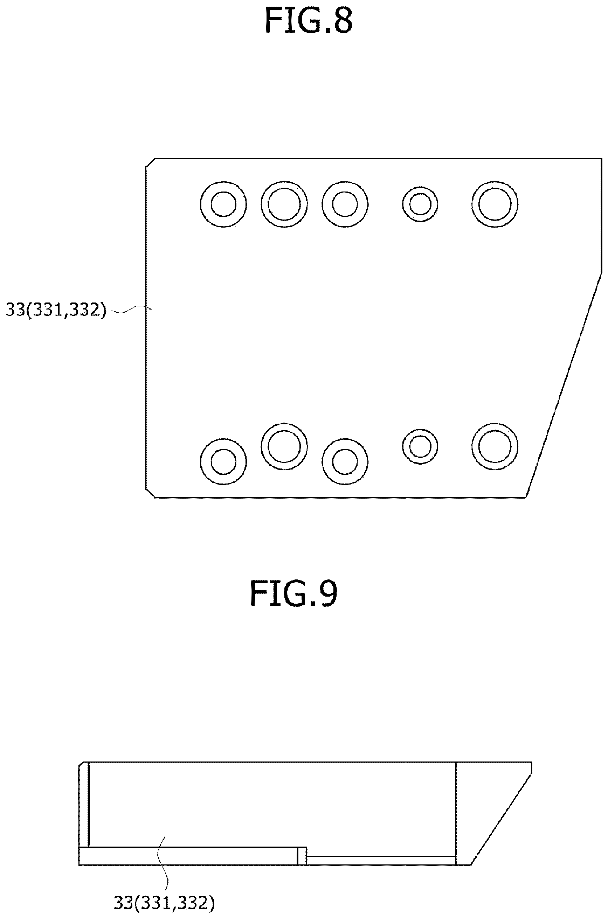

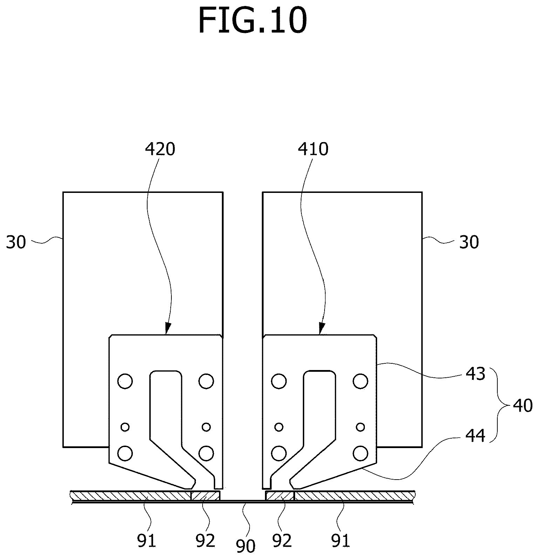

FIG. 5 is a schematic perspective view illustrating an insulating die according to an embodiment of the present disclosure. FIG. 6 is a schematic side view illustrating an upper die in FIG. 5; and FIG. 7 is a schematic bottom view illustrating the upper die in FIG. 5. FIG. 8 is a schematic side view illustrating a lower die in FIG. 5; and FIG. 9 is a schematic plan view illustrating the lower die in FIG. 5. FIG. 10 is a schematic view illustrating a state in which uniform flow velocity parts are symmetrically disposed according to an embodiment of the present disclosure. Referring to FIGS. 5 to 10, the insulating die 30 according to an embodiment of the present disclosure may include a die support part, or die support, 31, an upper die 32, and a lower die 33.

The die support part 31 may be fixedly installed on a fixed object, such as a facility or the ground.

The upper die 32 may be mounted on the die support part 31 and may supply the insulating slurry 92. The upper die 32 may include an upper die plate 35 and a slurry supply pipe 36. At least one of the upper die plate 35 and the slurry supply pipe 36 may be fixed to the die support part 31. A state in which the upper die 32 is disposed above the substrate 90 may be maintained by the die support part 31.

The lower die 33 may be coupled to the upper die 32. An upper surface of the lower die 33 may be disposed to face a lower surface of the upper die 32, and the upper die 32 and the lower die 33 may be assembled by a suitable fastening means, such as bolts.

The uniform flow velocity part 40 may be disposed between the upper die 32 and the lower die 33 and may guide the insulating slurry 92 to be discharged from the insulating die 30 such that the substrate 90 is coated with the insulating slurry 92. The uniform flow velocity part 40 may provide or define a moving path through which the insulating slurry 92 flows, and the path may be changed such that the flow velocity of the insulating slurry 92 is prevented or substantially prevented from stagnating.

The upper die 32 according to an embodiment of the present disclosure may include a first upper die 321 and a second upper die 322.

The first upper die 321 may be coupled to the die support part 31 and may supply the insulating slurry 92 to a first side of the electrode slurry 91. Based on FIG. 4, the first upper die 321 may supply the insulating slurry 92 to a left side of the electrode slurry 91.

The second upper die 322 may be coupled to the die support part 31 and may supply the insulating slurry 92 to a second side of the electrode slurry 91. Based on FIG. 4, the second upper die 322 may supply the insulating slurry 92 to a right side of the electrode slurry 91.

The lower die 33 according to an embodiment of the present disclosure may include a first lower die 331 and a second lower die 332.

The first lower die 331 may be coupled to the first upper die 321. The first lower die 331 may be assembled to a lower portion of the first upper die 321, and the uniform flow velocity part 40 may be disposed between the first upper die 321 and the first lower die 331.

The second lower die 332 may be coupled to the second upper die 322. The second lower die 332 may be assembled to a lower portion of the second upper die 322, and the uniform flow velocity part 40 may be disposed between the second upper die 322 and the second lower die 332.

The uniform flow velocity part 40 according to an embodiment of the present disclosure may include a first uniform part 410 and a second uniform part 420. The first uniform part 410 may be disposed between the first upper die 321 and the first lower die 331. The second uniform part 420 may be disposed between the second upper die 322 and the second lower die 332.

In an embodiment, the first upper die 321 and the second upper die 322 may be symmetrical to each other. The first upper die 321 and the second upper die 322 may be symmetrical to each other with respect to a coating area of the electrode slurry 91.

In an embodiment, to correspond to the first upper die 321 and the second upper die 322, the first lower die 331 and the second lower die 332 may be symmetrical to each other, and the first uniform part 410 and the second uniform part 420 may be symmetrical to each other.

The first uniform part 410 and the second uniform part 420 may guide the insulating slurry 92 in the diagonal direction and then discharge the insulating slurry 92. Accordingly, the insulating slurry 92 may be discharged from an edge of the insulating die 30. The second uniform part 420 in a first column and the first uniform part 410 in a second column may be arranged close to each other, and, in an embodiment, a distance between the second uniform part 420 and the first uniform part 410 may have a minimum width of 8 mm of the uncoated area.

The uniform flow velocity part 40 according to an embodiment of the present disclosure may include an inlet part 43 and an outlet part 44.

The inlet part 43 may guide the insulating slurry 92 supplied from the upper die 32. The inlet part 43 may provide or define a moving path of the insulating slurry 92 by forming a space connected to the slurry supply pipe 36.

The outlet part 44 may be connected to the inlet part 43, guide the insulating slurry 92 passing through the inlet part 43 in the diagonal direction, uniformize or substantially uniformize the flow velocity, and thus prevent or substantially prevent a stagnation phenomenon of the insulating slurry 92.

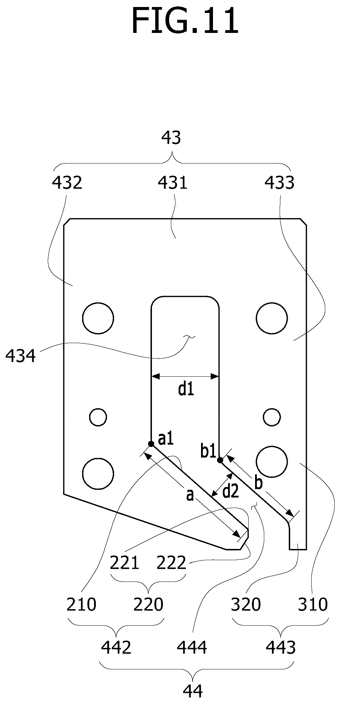

FIG. 11 is a schematic view illustrating the uniform flow velocity part according to an embodiment of the present disclosure. Referring to FIG. 11, the inlet part 43 according to an embodiment of the present disclosure may include a first inlet part 431, a second inlet part 432, and a third inlet part 433. In an embodiment, the first inlet part 431, the second inlet part 432, and the third inlet part 433 are integrally formed and are distinguished according to a location and a shape for convenience of description.

The second inlet part 432 may extend from a first side of the first inlet part 431, and the third inlet part 433 may extend from a second side of the first inlet part 431. Based on FIG. 11, the second inlet part 432 may extend from a left end of the first inlet part 431, and the third inlet part 433 may extend from a right end of the first inlet part 431. In an embodiment, the adjacent uniform flow velocity parts 40 are symmetrical to each other, and positions of the second inlet part 432 and the third inlet part 433 may be interchanged. An inflow flow path 434 may be formed or defined in a space between the second inlet part 432 and the third inlet part 433. The inflow flow path 434 may communicate with an outlet part of the slurry supply pipe 36. In an embodiment, a length of the third inlet part 433 may be formed to be longer than a length of the second inlet part 432.

The outlet part 44 according to the embodiment of the present disclosure may include a second outlet part 442 and a third outlet part 443. The second outlet part 442 may extend from the second inlet part 432. The third outlet part 443 may extend from the third inlet part 433.

An outflow flow path 444 for guiding the insulating slurry 92 may be formed in a space between the second outlet part 442 and the third outlet part 443. The outflow flow path 444 may communicate with the inflow flow path 434. The insulating slurry 92 moved along a straight line by the inflow flow path 434 may be discharged after being moved in the diagonal direction by the outflow flow path 444. Since the insulating slurry 92 is discharged to a side of the insulating die 30 by the outflow flow path 444, the uncoated area between the adjacent insulating dies 30 may be minimized or reduced.

The second outlet part 442 according to an embodiment of the present disclosure may include a second outflow inclination part 210 and a second outflow extension part 220.

The second outflow inclination part 210 may extend from the second inlet part 432 in a diagonal direction. In an embodiment, the second inlet part 432 extends in a direction perpendicular to a surface of the substrate 90, the second outflow inclination part 210 may extend to have an inclination with the surface of the substrate 90, and an end thereof may be closer to the substrate 90. The outflow flow path 444 formed by the second outflow inclination part 210 may change the movement path of the insulating slurry 92 in the diagonal direction. When a condition for changing the insulating slurry 92 in the diagonal direction is satisfied, a shape of the second outflow inclination part 210 may be variously modified. The second outflow inclination part 210 may remove a low flow velocity section of the insulating slurry 92.

The second outflow extension part 220 may extend from the second outflow inclination part 210. The second outflow extension part 220 may be an outlet part of the second outlet part 442. The second outflow extension part 220 may include a second extension tapered portion 221 and a second extension chamfered portion 222. The second extension tapered portion 221 may extend from the second outflow inclination part 210 and, in an embodiment, may have a tapered shape. In an embodiment, the second extension tapered portion 221 may protrude inward more than the second outflow inclination part 210 does. Accordingly, the insulating slurry 92 having an increased flow velocity may be pushed by the second extension tapered portion 221 such that a uniform or substantially uniform flow velocity of the discharged insulating slurry 92 may be maintained. The second extension chamfered portion 222 may protrude from an end portion of the second outflow extension part 220. In an embodiment, the second extension chamfered portion 222 may be processed or molded to form an inclined surface such that the discharge port may be expanded. The second extension chamfered portion 222 may have one or more inclined surfaces formed therein. The insulating slurry 92 may be discharged by passing through the second extension tapered portion 221 and then passing through the second extension chamfered portion 222 corresponding to the discharge port.

The third outlet part 443 according to an embodiment of the present disclosure may include a third outflow inclination part 310 and a third outflow extension part 320.

The third outflow inclination part 310 may extend from the third inlet part 433 in a diagonal direction and may be disposed to face the second outflow inclination part 210. In an embodiment, the third inlet part 433 extends in a direction perpendicular to the substrate 90, the third outflow inclination part 310 may extend to have an inclination with the substrate 90 and, thus, an end thereof may be closer to the substrate 90. The outflow flow path 444 formed by the third outflow inclination part 310 may change the movement path of the insulating slurry 92 in a diagonal direction. When a condition for changing the insulating slurry 92 in a diagonal direction is satisfied, a shape of the third outflow inclination part 310 may be variously modified. The third outflow inclination part 310 may remove a low flow velocity section of the insulating slurry 92.

The third outflow extension part 320 may extend from the third outflow inclination part 310. The third outflow extension part 320 may be an outlet part of the third outlet part 443. The third outflow extension part 320 may have a rectangular shape and extend in a direction perpendicular to the foil/substrate 90. In an embodiment, a chamfer processing may be additionally performed in the third outflow extension part 320.

Referring to FIG. 11, a linear length a of the second outflow inclination part 210 for providing the outflow flow path 444 may be a length of a partition wall of the second outflow inclination part 210 for guiding the insulating slurry 92 in a diagonal direction. A linear length b of the third outflow inclination part 310 for providing the outflow flow path 444 may be a length of a partition wall of the third outflow inclination part 310 for guiding the insulating slurry 92 in a diagonal direction. In an embodiment, the linear length a of the second outflow inclination part 210 may be the same as the linear length b of the third outflow inclination part 310. In an embodiment, the linear length a of the second outflow inclination part 210 may be greater than the linear length b of the third outflow inclination part 310.

An entry point a1 of the second outflow inclination part 210 may be a starting point of an inclined surface of the second outflow inclination part 210 for the insulating slurry 92 to pass through the inflow flow path 434 and then enter the outflow flow path 444. An entry point b1 of the third outflow inclination part 310 may be a starting point of an inclined surface of the third outflow inclination part 310 for the insulating slurry 92 to pass through the inflow flow path 434 and then enter the outflow flow path 444. In an embodiment, the outlet part 44 is disposed below the inlet part 43 based on FIG. 11, and the entry point a1 of the second outflow inclination part 210 may be higher than the entry point b1 of the third outflow inclination part 310. Accordingly, a low-velocity stagnant section of the insulating slurry 92 may be removed.

In an embodiment, a width d1 of the inflow flow path 434 may be greater than a width d2 of the outflow flow path 444. The width d1 of the inflow flow path 434 may correspond to an inner diameter of the slurry supply pipe 36. The insulating slurry 92 being moved in the inflow flow path 434 may quickly pass through the outflow flow path 444. In an embodiment, the width d2 of the outlet part flow path 444 may be designed to maintain the same state. In an embodiment, the width d2 of the outflow flow path 444 may be decreased or increased in an outlet part direction depending on a state of the insulating slurry 92.

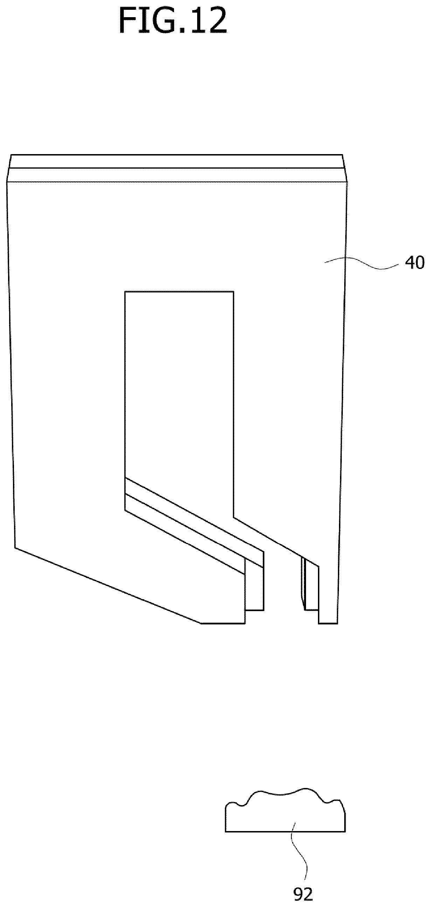

FIG. 12 is a schematic view illustrating a uniform flow velocity part according to another embodiment of the present disclosure. Referring to FIG. 12, a plurality of uniform flow velocity parts 40 according to an embodiment of the present disclosure may be joined. That is, the plurality of uniform flow velocity parts 40 may be coupled and thus manufactured in a certain (e.g., a set) thickness. As an example, shapes of flow paths of the pair of joined uniform flow velocity parts 40 may be designed differently. Accordingly, insulating layers having various shapes may be implemented.

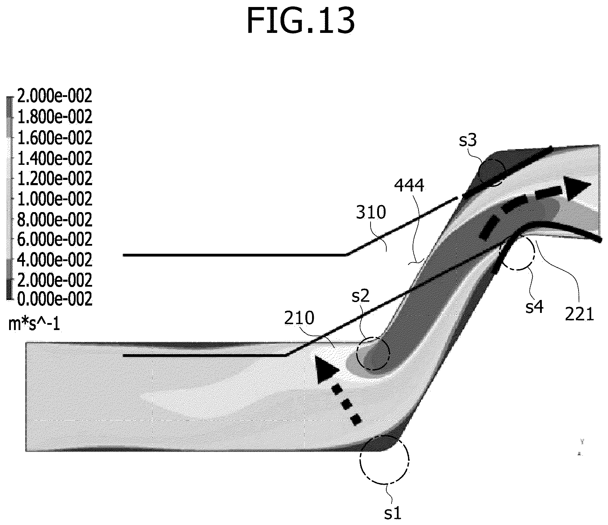

FIG. 13 is a schematic view illustrating a flow velocity trend of the uniform flow velocity part according to an embodiment of the present disclosure. Referring to FIG. 13, if a straight flow path and a diagonal flow path are arranged in succession, a flow velocity of the insulating slurry 92 passing through a first area s1 decreases, and a flow velocity of the insulating slurry 92 passing through a second area s2 increases. According to embodiments of the present disclosure, to resolve stagnation in the first area s1, the second outflow inclination part 210 may guide the insulating slurry 92 ahead of the third outflow inclination part 310 to remove a low flow velocity section. If the diagonal flow path and the straight flow path are arranged in succession, a flow velocity of the insulating slurry 92 passing through a third area s3 decreases, and a flow velocity of the insulating slurry 92 passing through a fourth area s4 increases. In one or more embodiments of the present disclosure, the second extension tapered portion 221 may have a tapered shape to push the insulating slurry 92 passing through the fourth area s4 such that a low flow velocity section in the third area s3 may be removed. In an embodiment, an inclination angle of the outflow flow path 444 corresponding to the diagonal flow path may be designed to be gentle.

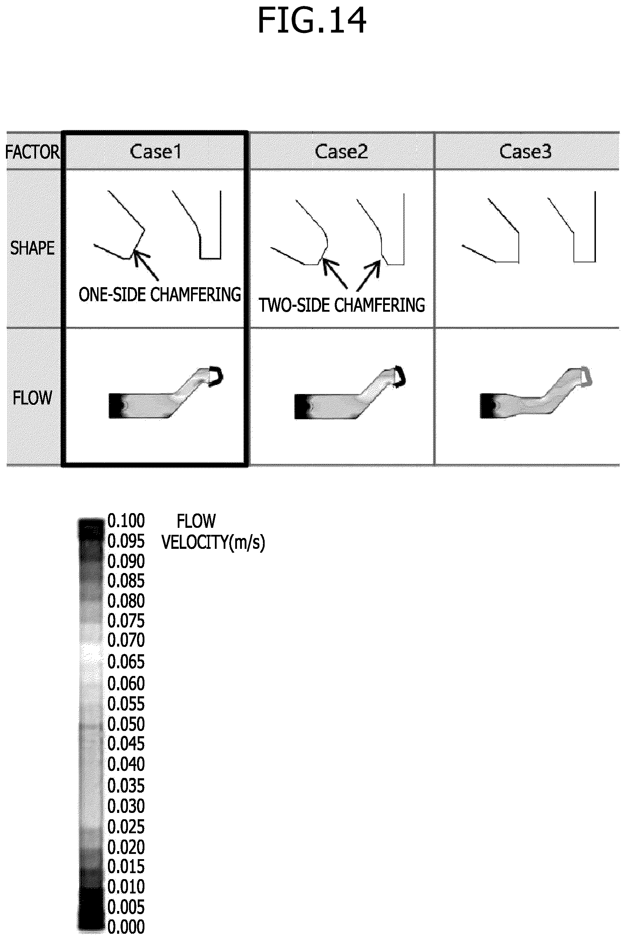

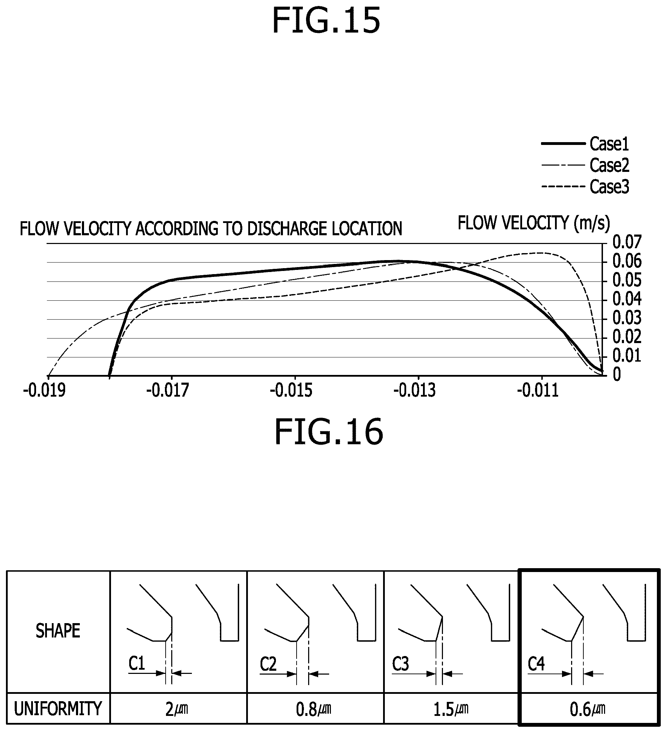

FIGS. 14 and 15 are schematic views illustrating uniformity of a coating thickness according to a shape of a discharge port of the uniform flow velocity part according to an embodiment of the present disclosure. Referring to FIGS. 14 and 15, in Case 1, uniformity of the insulating slurry 92 was measured when only the second outflow extension part 220 is chamfered. In Case 2, the uniformity of the insulating slurry 92 was measured when the second outflow extension part 220 and the third outflow extension part 320 are chamfered. In Case 3, the uniformity of the insulating slurry 92 was measured in a state in which the chamfering of the second outflow extension part 220 and the third outflow extension part 320 is omitted. As a result of the experiment, the shape of the discharge port of the uniform flow velocity part 40 may secure flow velocity uniformity at a discharge point of the insulating slurry 92 if the one-side chamfering is designed as in Case 1.

FIG. 16 is a schematic view illustrating uniformity of a thickness according to a chamfer shape of the uniform flow velocity part according to an embodiment of the present disclosure. Referring to FIG. 16, discharge uniformity may be changed depending on the amount of chamfering. In one or more embodiments of the present disclosure, the one-side chambering is applied as in C4, and, thus, the uniformity is optimized or increased. However, a measured value may be changed depending on the state of the insulating slurry 92.

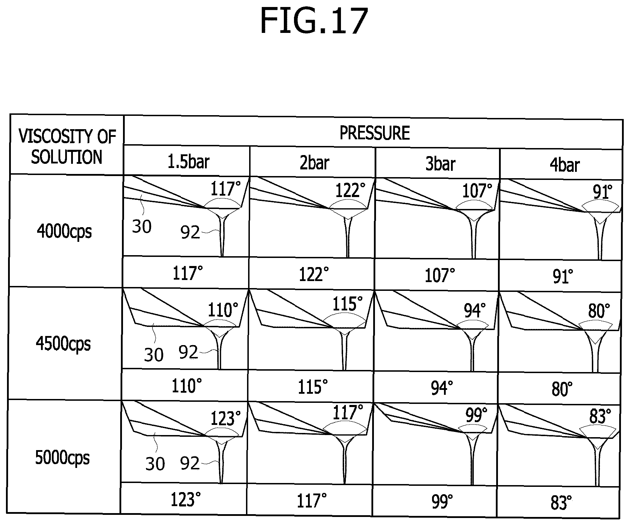

FIG. 17 is a schematic view illustrating a discharge angle according to viscosity and a pressure of an insulating slurry discharged through the uniform flow velocity part according to an embodiment of the present disclosure. Referring to FIG. 17, a discharge angle of the insulating slurry 92 is changed according to viscosity and a pressure of the insulating slurry 92. Thus, a coating thickness and/or a coating width of the insulating slurry 92 may be controlled by a discharge pressure and/or a height of the insulating die 30.

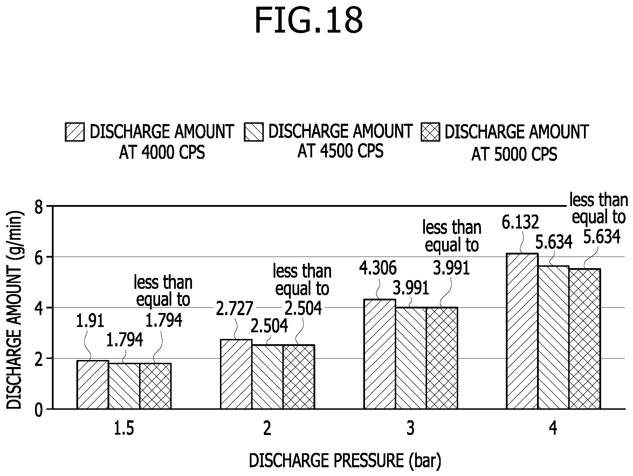

FIG. 18 is a schematic view illustrating a discharge amount according to the viscosity and a discharge pressure of the insulating slurry discharged through the uniform flow velocity part according to an embodiment of the present disclosure. Referring to FIG. 18, it can be seen that a discharge amount of the insulating slurry 92 increases according to the discharge pressure, and as the viscosity of the insulating slurry 92 becomes less, the discharge amount becomes greater.

In the slot die 1 for manufacturing a secondary battery electrode according to one or more embodiments of the present disclosure, the substrate 90 may be coated with the electrode slurry 91 supplied from the electrode die 20 in one or more columns, and then the insulating die 30 may coat the substrate 90 with the insulating slurry 92. The pair of insulating dies 30 may be symmetrical to each other, may discharge the insulating slurry 92 to an edge thereof, and thus may be used in a model having a narrow uncoated area.

In the slot die 1 for manufacturing a secondary battery electrode according to one or more embodiments of the present disclosure, a stagnant section of the insulating slurry 92 discharged from the insulating die 30 can be removed, a flow velocity can be uniformly or substantially uniformly guided, and coating quality can be improved.

In a slot die for manufacturing a secondary battery electrode according to one or more embodiments of the present disclosure, one or more columns of a foil/substrate can be coated with an electrode slurry supplied from an electrode die, and then an insulating die can coat the foil/substrate with an insulating slurry. A pair of insulating dies can be symmetrical to each other, can discharge the insulating slurry to an edge, and thus can be used in a model having a narrow uncoated area.

In a slot die for manufacturing a secondary battery electrode according to one or more embodiments of the present disclosure, a stagnant section of an insulating slurry discharged from an insulating die can be removed, a flow velocity can be uniformly or substantially uniformly guided, and coating quality can be improved.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments, within the scope of the appended claims.

Therefore, the technical scope of the present disclosure should be defined by the claims.

## Claims

1. A slot die (1) for manufacturing a secondary battery electrode, the slot die comprising:
a supplier (10) configured to supply a substrate (90);
an electrode die (20) configured to coat the substrate with an electrode slurry (91);
an insulating die (30) configured to coat the substrate having passed through the electrode die with an insulating slurry (92); and
a uniform flow velocity part (40) on the insulating die and configured to reduce a flow velocity deviation of the insulating slurry which is discharged.

2. The slot die as claimed in claim 1, wherein the supplier comprises:
an unwinding roller (11) around which the substrate is configured to be wound and which is configured to supply the substrate;
a coating roller (12) facing the electrode die and the insulating die and configured to allow the substrate to pass therethrough; and
a moving roller (13) configured to move the substrate having passed through the coating roller.

3. The slot die as claimed in claims 1 or 2, wherein the electrode die is configured to coat the electrode slurry such that a single-column electrode part is formed on the substrate, and
the insulating die is arranged above the substrate and is configured to coat the insulating slurry such that insulating parts are formed on opposite sides of the electrode slurry.

4. The slot die as claimed in claims 1 or 2, wherein the electrode die is configured to coat the electrode slurry such that multi-column electrode parts are formed on the substrate to be spaced apart from each other, and
the insulating die is arranged above the substrate and is configured to coat the insulating slurry such that insulating parts are formed on opposite sides of the electrode slurry.

5. The slot die as claimed in any of claims 1 to 4, wherein the insulating die comprises:
a die support (31);
an upper die (32) mounted on the die support and configured to supply the insulating slurry; and
a lower die (33) coupled to the upper die, and
the uniform flow velocity part is arranged between the upper die and the lower die and is configured to guide the insulating slurry to be discharged.

6. The slot die as claimed in claim 5, wherein the upper die comprises:
a first upper die (321) coupled to the die support and configured to supply the insulating slurry to a first side of the electrode slurry; and
a second upper die (322) coupled to the die support and configured to supply the insulating slurry to a second side of the electrode slurry.

7. The slot die as claimed in claim 6, wherein the lower die comprises:
a first lower die (331) coupled to the first upper die; and
a second lower die (332) coupled to the second upper die.

8. The slot die as claimed in claim 7, wherein the uniform flow velocity part comprises:
a first uniform part (410) between the first upper die and the first lower die; and
a second uniform part (420) between the second upper die and the second lower die.

9. The slot die as claimed in claim 8, wherein the first upper die and the second upper die are symmetrical to each other,
the first lower die and the second lower die are symmetrical to each other, and
the first uniform part and the second uniform part are symmetrical to each other.

10. The slot die as claimed in any of claims 5 to 9, wherein the uniform flow velocity part comprises:
an inlet part (43) configured to guide the insulating slurry supplied from the upper die; and
an outlet part (44) connected to the inlet part and configured to guide the insulating slurry passing through the inlet part in a diagonal direction and uniformize a flow velocity.

11. The slot die as claimed in claim 10, wherein the inlet part comprises:
a first inlet part (431);
a second inlet part (432) extending from a first side of the first inlet part; and
a third inlet part (433) extending from a second side of the first inlet part, and
an inflow flow path (434) is defined in a space between the second inlet part and the third inlet part.

12. The slot die as claimed in claim 11, wherein the outlet part comprises:
a second outlet part (442) extending from the second inlet part; and
a third outlet part (443) extending from the third inlet part, and
an outflow flow path (444) communicating with the inflow flow path is defined in a space between the second outlet part and the third outlet part in the diagonal direction.

13. The slot die as claimed in claim 12, wherein the second outlet part comprises:
a second outflow inclination part (210) extending from the second inlet part in the diagonal direction; and
a second outflow extension part (220) extending from the second outflow inclination part.

14. The slot die as claimed in claim 13, wherein the third outlet part comprises:
a third outflow inclination part (310) extending from the third inlet part in the diagonal direction and facing the second outflow inclination part; and
a third outflow extension part (320) extending from the third outflow inclination part and facing the second outflow extension part.

15. The slot die as claimed in claim 14, wherein a length of the second outflow inclination part is greater than or equal to a length of the third outflow inclination part.
